(19)

Europäisches
Patentamt
European
Patent Office
Office européen
des brevets

(11) **EP 3 929 717 A1**

(12) **EUROPEAN PATENT APPLICATION**
published in accordance with Art. 153(4) EPC

(43) Date of publication:
29.12.2021 Bulletin 2021/52

(21) Application number: 20858442.5

(22) Date of filing: 28.07.2020

(51) Int Cl.:
*G06F 3/0488* (2013.01)     *G06F 3/0481* (2013.01)
*H04M 1/725* (2021.01)

(86) International application number:
**PCT/CN2020/105148**

(87) International publication number:
**WO 2021/036646 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 29.08.2019 CN 201910808947

(71) Applicant: **ZTE Corporation**
**shenzhen Guangdong 518057 (CN)**

(72) Inventor: **XU, Qian**
**Shenzhen, Guangdong 518057 (CN)**

(74) Representative: **Zoli, Filippo et al**
**Brunacci & Partners S.r.l.**
**Via Pietro Giardini, 625**
**41125 Modena (IT)**

(54) **TERMINAL SCREEN OPERATING METHOD, TERMINAL AND STORAGE MEDIUM**

(57)     A terminal screen operating method, a terminal and a storage medium. The terminal screen operating method comprises: acquiring initial coordinates of a mobile mark controlled by a first touching operation (SI00); acquiring a displacement direction of the mobile mark according to the first touching operation (S200); acquiring a displacement distance of the mobile mark according to a pressure value corresponding to the first touching operation (S300); and changing the position of the mobile mark by means of the displacement direction, the displacement distance and the initial coordinates of the mobile mark, so as to realize the selection (S400) and control (S500) of a remote application.

```
┌────────────────────────────────────────────┐
│ When a valid first touch operation is detected, │── S100
│ acquire an initial coordinate of a moving mark  │
│    controlled by the first touch operation      │
└────────────────────────────────────────────┘
                     │
                     ▼
┌────────────────────────────────────────────┐
│ Acquire a displacement direction of the moving │── S200
│   mark according to the first touch operation   │
└────────────────────────────────────────────┘
                     │
                     ▼
┌────────────────────────────────────────────┐
│ Acquire a displacement distance of the moving   │── S300
│ mark according to a pressure value corresponding│
│         to the first touch operation            │
└────────────────────────────────────────────┘
                     │
                     ▼
┌────────────────────────────────────────────┐
│ Change a position of the moving mark according  │── S400
│ to the displacement direction, the displacement │
│     distance and the initial coordinate of the  │
│ moving mark, so as to select a target application│
└────────────────────────────────────────────┘
                     │
                     ▼
┌────────────────────────────────────────────┐
│        Control the target application           │── S500
└────────────────────────────────────────────┘
```

FIG. 2

EP 3 929 717 A1

## Description

**CROSS-REFERENCE TO RELATED APPLICATION**

This application is filed on the basis of and claims priority to Chinese patent application No. 201910808947.8 filed August 29, 2019, the content of which is incorporated herein by reference in its entirety.

**TECHNICAL FIELD**

Embodiments of the application relates to, but not limited to, the field of electronic technology, and in particular, to a method for operating a terminal screen, a terminal and a computer readable storage medium.

**BACKGROUND**

With the popularization of smart terminals such as smart phones and tablet computers, more and more users prefer to use smart terminals with larger screens. For users, a larger screen means that more content can be displayed, especially in games and watching videos or movies, which are more attractive to users. For manufacturers, a larger screen means more space for a terminal, which is not only beneficial to heat dissipation design, but also beneficial to making thinner terminals.

However, for terminals with a larger screen, it is difficult to operate with one hand, especially when users are standing on a bus or subway, or when they have to use one hand to operate terminals, they may fail to operate applications far away from their fingers in the screen, which will cause inconvenient use and affect the user experience.

**SUMMARY**

The following is a summary of the subject matter described in detail herein. This summary is not intended to limit the scope of protection of the claims.

In a first aspect, according to an embodiment of the present application, a method for operating a terminal screen, a terminal and a computer readable storage medium are provided, which can facilitate a user to operate the terminal with one hand, thereby improving the user experience.

In a second aspect, according to an embodiment of the present application, a method for operating a terminal screen is provided, including: in response to a detection of a valid first touch operation, acquiring an initial coordinate of a moving mark controlled by the first touch operation; acquiring a displacement direction of the moving mark according to the first touch operation; acquiring a displacement distance of the moving mark according to a pressure value corresponding to the first touch operation; changing a position of the moving mark according to the displacement direction, the displacement distance and the initial coordinate of the moving mark so as to select a target application; and controlling the target application.

In a third aspect, according to an embodiment of the present application, a terminal is further provided, including a memory, a processor and a computer program stored in the memory and executable by the processor, where the computer program, when executed by the processor, causes the processor to perform the method for operating a terminal screen in the second aspect described above.

In a fourth aspect, according to an embodiment of the present application, a computer readable storage medium storing a computer executable instruction is further provided, where the computer executable instruction, when executed by a processor, causes the processor to perform the method for operating a terminal screen in the second aspect described above.

Additional features and advantages of the present application will be set forth in the description which follows, and in part will be obvious from the description, or may be learned by practice of the present application. The objectives and other advantages of the present application may be realized and acquired by the structures pointed out in the description, claims and drawings.

**BRIEF DESCRIPTION OF DRAWINGS**

The drawings are provided for a further understanding of the technical schemes of the present application, and constitute a part of the specification. The drawings and the embodiments of the present application are used to explain the technical schemes of the present application, and do not constitute a limitation of the technical schemes of the present application.

FIG. 1 is a schematic frame diagram of a system architecture platform for performing a method for operating a terminal screen according to an embodiment of the present application.

FIG. 2 is a flowchart of the method for operating a terminal screen according to an embodiment of the present application.

FIG. 3 is a flowchart of a process of detecting a valid touch operation in the method for operating a terminal screen according to another embodiment of the present application.

FIG. 4 is a schematic diagram of contents displayed on the screen during the use of the method for operating a terminal screen according to an embodiment of the present application.

FIG. 5 is a flowchart of a process of acquiring a displacement direction in the method for operating a terminal screen according to another embodiment of the present application.

FIG. 6 is a schematic diagram of contents displayed on the screen during the use of the method for operating a terminal screen according to another embodiment of the present application.

FIG. 7 is a flowchart of a process of acquiring a displacement direction in the method for operating a terminal screen according to another embodiment of the present application.

FIG. 8 is a schematic diagram of contents displayed on the screen during the use of the method for operating a terminal screen according to another embodiment of the present application.

FIG. 9 is a flowchart of a process of acquiring a displacement distance in the method for operating a terminal screen according to another embodiment of the present application.

FIG. 10 is a flowchart of a method for operating a terminal screen according to another embodiment of the present application.

FIG. 11 is a schematic diagram of a terminal according to an embodiment of the present application.

## DETAILED DESCRIPTION

Objectives, technical schemes and advantages of the present application will be clearer from a detailed description of embodiments of the present application in conjunction with the drawings. It should be understood that the specific embodiments described herein are used to explain the present application, and are not intended to limit the application.

It should be noted that although the functional modules are divided in the schematic diagram of the device and the logical sequence is shown in the flowchart, in some cases, the steps shown or described may be performed in a manner different from the module division in the device or in a sequence different from that in the flowchart. The terms "first", "second", etc., in the description, claims and the above drawings are used to distinguish similar objects, and are not necessarily used to describe a specific order or sequence.

The present application provides a method for operating a terminal screen, a terminal and a computer readable storage medium. After detecting a valid first touch operation, the terminal acquires an initial coordinate of a moving mark used as a reference starting point; then acquires a displacement direction of the moving mark according to the valid first touch operation, and acquires a displacement distance of the moving mark according to a pressure value corresponding to the valid first touch operation; after that, the terminal takes the initial coordinate of the moving mark as the reference starting point to make the moving mark move by the displacement distance in the displacement direction, so that the moving mark can replace a user's finger to select and operate a distal application in the screen. In this way, the distal application that cannot be touched by the user's finger can be controlled through proximal operation, so as to facilitate the user to operate the terminal with one hand and improve the user experience.

The embodiments of the present application will be further explained with reference to the drawings.

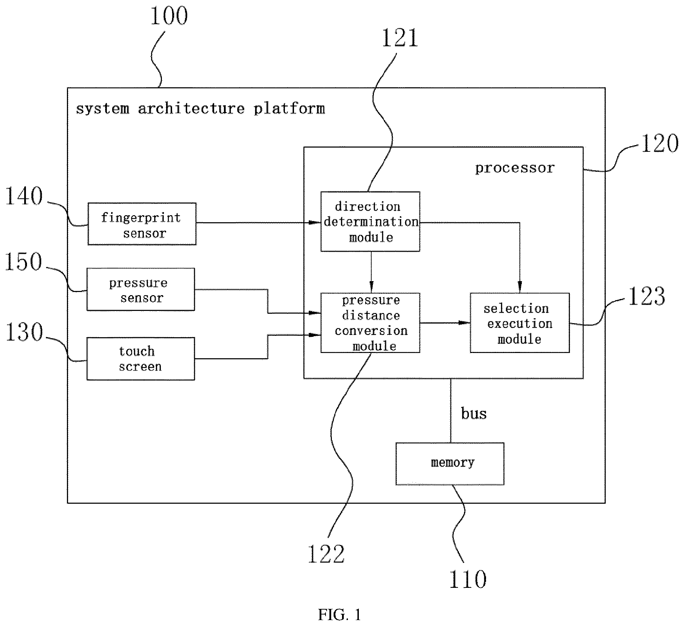

As shown in FIG. 1, FIG. 1 is a schematic frame diagram of a system architecture platform for performing a method for operating a terminal screen according to an embodiment of the present application.

As shown in FIG. 1, the system architecture platform 100 includes a memory 110, a processor 120, a touch screen 130, a fingerprint sensor 140 and a pressure sensor 150. The touch screen 130, the fingerprint sensor 140 and the pressure sensor 150 are electrically connected to the processor 120, respectively. The memory 110 and the processor 120 may be connected through a bus or other means. For example, in FIG. 1, the memory 110 and the processor 120 are connected through a bus.

The touch screen 130 can acquire a position coordinate of a touch operation, the fingerprint sensor 140 can acquire a fingerprint pattern of a user, and the pressure sensor 150 can acquire a pressure value corresponding to the touch operation.

In addition, a direction determination module 121, a pressure distance conversion module 122 and a selection execution module 123 are constructed in the processor 120. When a user's valid touch operation on the touch screen 130 is detected, the processor 120 will generate a moving mark as a reference starting point. In addition, the direction determination module 121 is configured to determine a direction of the user's operation according to the user's touch operation. The pressure distance conversion module 122 is configured to convert a pressure value generated by the touch operation into a displacement distance of the moving mark according to the direction of the operation and screen size information. The selection execution module 123 is configured to change a position of the moving mark according to the direction of the operation and the displacement distance, so that the moving mark can select and operate a target application.

It can be understood by those having ordinary skills in the art that the system architecture platform 100 may be applied to any type of intelligent terminal, such as smart phones, tablet computers or other handheld intelligent mobile devices.

As a non-transient computer readable storage medium, the memory 110 may be used to store a non-transient software program and a non-transient computer executable program. In addition, the memory 110 may include a high-speed random access memory, and may also include a non-transient memory, such as at least one disk memory device, flash memory device, or other non-transient solid-state memory devices. In some implementations, the memory 110 may include memories remotely set relative to the processor 120, and these remote memories may be connected to the system architecture platform 100 through a network. Examples of the above network include, but are not limited to, the Internet, intranet, local area network (LAN), mobile communication network and combinations thereof.

It can be understood by those having ordinary skills in the art that the device architecture shown in FIG. 1 does not constitute a limitation of the system architecture platform 100, and may include more or fewer components than shown, or combinations of components, or different arrangement of components.

Based on the above system architecture platform 100, various embodiments of the method for operating a terminal screen of the present application are proposed.

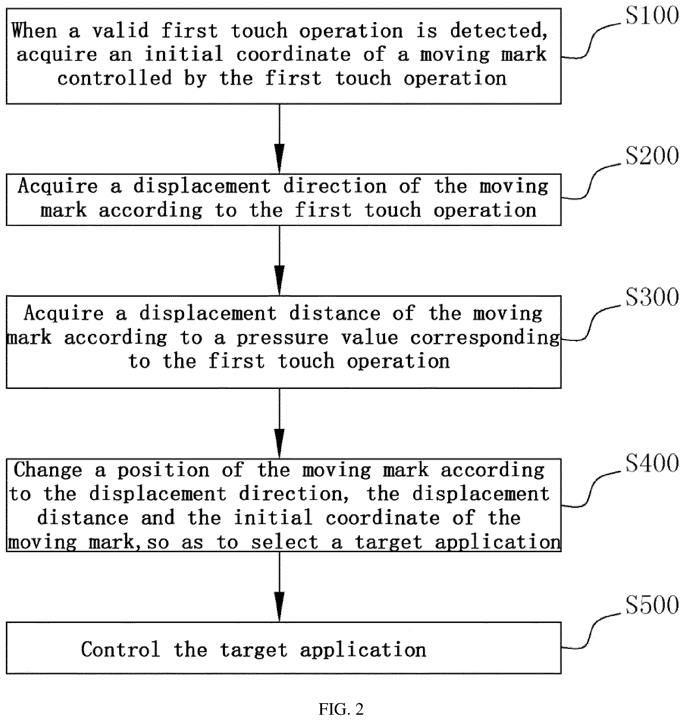

As shown in FIG. 2, FIG. 2 is a flowchart of a method for operating a terminal screen according to an embodiment of the present application. The method for operating a terminal screen includes but is not limited to the following steps S100 to S500.

At step S100, when a valid first touch operation is detected, an initial coordinate of a moving mark controlled by the first touch operation is acquired.

In an embodiment, when a first touch operation is detected, validity of the first touch operation may be determined first. For example, a valid region may be set, and a distal application may be operated when it is determined that the first touch operation is a valid operation applied to the valid region, so as to avoid affecting the normal operation of the user to the terminal. In addition, other limiting conditions may be set. For example, the distal application can be operated only when a detected pressure value is greater than a preset pressure threshold.

In an embodiment, the moving mark may be used as a movable identification, and have a position changeable with a state of the first touch operation. For example, the moving mark may move by different distances according to different pressure values of the first touch operation. For another example, the moving mark may move along with a moving trajectory of the first touch operation. After the moving mark moves to a target position, different operations may be performed according to different states of the first touch operation.

In an embodiment, the initial coordinate of the moving mark may be located at any position in the screen, for example, at the center of the screen, at a corner of the screen, at a position in the screen where an application is located, or at a position corresponding to the first touch operation. In some examples of this embodiment, the initial coordinate of the moving mark is located at a position corresponding to the first touch operation. For example, the moving mark is generated at the position corresponding to the first touch operation when the first touch operation is detected as valid. In addition, the moving mark can be activated only when the first touch operation is detected as valid. For example, the moving mark can be controlled by the first touch operation only when the valid first touch operation is detected as valid, thus avoiding affecting the normal operation of the user to the terminal under normal use.

In an embodiment, the moving mark may use a cursor mode visible to the user displayed in the screen, or a hidden mode invisible to the user. For example, when the moving mark is in the cursor mode, the user may adjust the state of the first touch operation according to the visible cursor, such as adjusting the pressure value of the first touch operation, so that the cursor can change its position according to the user's control, thus achieving the purpose of selecting and controlling the distal application according to the user's wishes. For another example, when the moving mark is in the hidden mode, the initial coordinate of the moving mark may be located at a position in the screen where an application is located, that is, when the moving mark is activated, the moving mark may select the application corresponding to the position, and when the user adjusts the state of the first touch operation, the moving mark may be moved from the position of the currently selected application to the position of other adjacent applications, so that the selected application can be in a selected state indicated by highlighting or jittering.

At step S200, a displacement direction of the moving mark is acquired according to the first touch operation.

In an embodiment, the displacement direction of the moving mark may be acquired according to the fingerprint pattern corresponding to the first touch operation. For example, the displacement direction may be acquired according to a direction trend reflected in the fingerprint pattern. Alternatively, the displacement direction of the moving mark may also be acquired according to the pressure (for example, the position change of the pressure) corresponding to the first touch operation.

In an embodiment, there may be different valid displacement directions according to different initial coordinates of the moving mark. For example, when the initial coordinate of the moving mark is located at a lower left corner of the screen, the valid displacement direction may be limited to a range of 90 degrees defined by upward and rightward radiations. For another example, when the initial coordinate of the moving mark is located at the center of the screen, the valid displacement direction may be any direction in a range of 360 degrees.

At step S300, a displacement distance of the moving mark is acquired according to a pressure value corresponding to the first touch operation.

In an embodiment, when the valid first touch operation is detected, the pressure value corresponding to the first touch operation may be acquired, and then a pressure-displacement mapping relationship with a proportional change between the acquired pressure value and required displacement distance is established, so that the displacement distance can be changed according to the pressure value. For example, when the user performs a first touch operation by pressing a finger to the valid region in the screen, a first pressure value will be generated. The first pressure value will correspondingly generate a first displacement distance according to the pressure-displacement mapping relationship. As the user increases the pressing pressure of his finger, a second pressure value will be generated, which is larger than the first pressure value. At this time, a second displacement distance will be generated according to the pressure displacement mapping relationship, and the second displacement distance is greater than the first displacement distance. Therefore, by changing the pressure value corresponding to the first touch operation, the user can change the displacement distance, so that the distal application that cannot be touched by the user's finger can be controlled through proximal operation.

In an embodiment, the displacement distance of the moving mark may also be acquired according to the pressure value corresponding to the first touch operation by presetting a pressure level. For example, three pressure levels may be preset, and each pressure level corresponds to the same displacement distance, such as displacement distance L. For example, when the pressure value corresponding to the first touch operation does not reach the first pressure level, the displacement distance of the moving mark is L; when the pressure value corresponding to the first touch operation is between the first pressure level and the second pressure level, the displacement distance of the moving mark is 2L, and so on.

At step S400, a position of the moving mark is changed according to the displacement direction, the displacement distance and the initial coordinate of the moving mark, so as to select a target application.

In an embodiment, after the displacement direction is determined, the initial coordinate of the moving mark may be changed according to the displacement distance, so as to achieve the purpose of changing the position of the moving mark along the displacement direction. By changing the displacement direction and the displacement distance, the moving mark can be moved from its initial coordinate to the position where the target application is located, so that the target application can be selected.

In an embodiment, when the target application is selected, the target application may present different selected states. For example, when the target application is in the selected state, the target application may present a highlighted state, a jittering state, an application icon zoom-in state or an application icon zoom-out state. It can be understood by those having ordinary skills in the art that the selected state of the target application is not limited to the above embodiments, as long as the selected target application can attract the attention of the user.

It can be understood by those having ordinary skills in the art that the target application will occupy a certain screen range in the screen. Therefore, when the current coordinate of the moving mark is within the screen range corresponding to the target application in the screen, it can be considered that the moving mark has reached the position of the target application, so that the target application can be selected or controlled.

At step S500, the target application is controlled.

In an embodiment, controlling the target application may include starting the target application, editing the position of the target application, modifying the name of the target application, or deleting the target application, etc.

In an embodiment, there may be different implementations for triggering the control of the target application. For example, when the target application is selected, a click instruction may be sent to the target application by sending a simulation instruction to control the target application. For another example, when the target application is selected and kept in the selected state for a period of time, the target application is controlled by sending a simulation instruction.

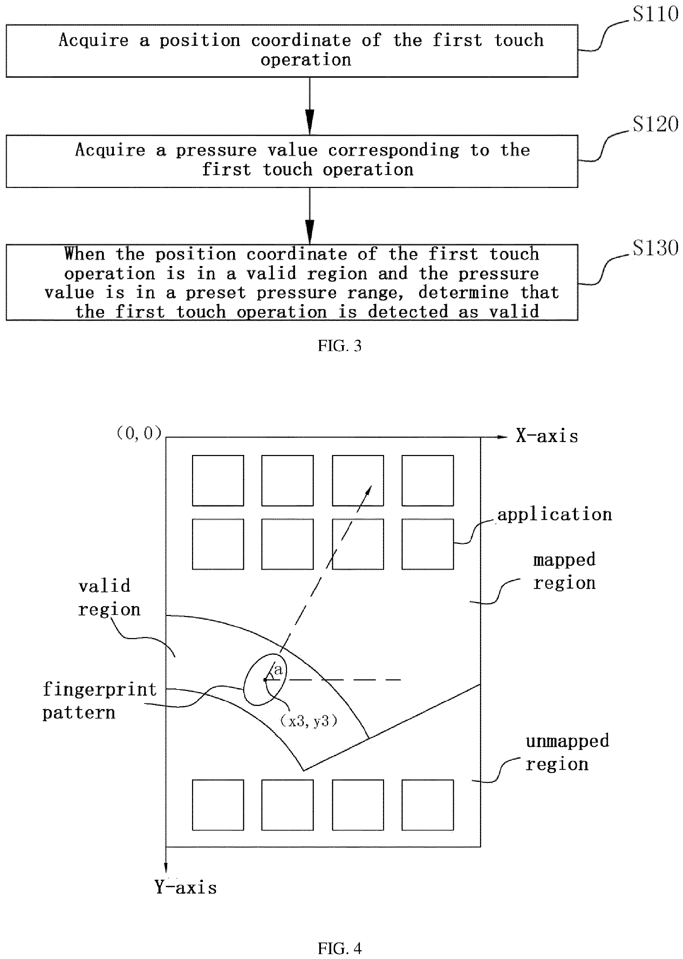

As shown in FIG. 3, in an embodiment, when a first touch operation is detected, the validity of the first touch operation may be determined by the following steps S110 to S130.

At step S110, a position coordinate of the first touch operation is acquired.

At step S120, a pressure value corresponding to the first touch operation is acquired.

At step S130, when the position coordinate of the first touch operation is in a valid region and the pressure value is in a preset pressure range, it is determined that the detected first touch operation is valid.

In an embodiment, when the first touch operation is detected, the position coordinate of the first touch operation is acquired and determined. When the position coordinate is within the preset valid region, the position coordinate is determined as valid position information, and then the subsequent steps are executed; otherwise, the first touch operation may be regarded as the normal operation of the user, and the subsequent steps will not be executed. When the position coordinate is determined as valid position information, it is determined whether the pressure value corresponding to the first touch operation is valid. If the pressure value is in the preset pressure range, the pressure value is valid, that is, the first touch operation is a valid operation, so that the subsequent steps can be performed. If the pressure value is less than a lower limit of the preset pressure range, the first touch operation may be considered as a false touch caused by the user's carelessness, and the subsequent steps will not be executed. If the pressure value is greater than an upper limit of the preset pressure range, the first touch operation may be considered as the normal operation of the user, and the subsequent steps will not be executed.

In an embodiment, as shown in FIG. 4, the screen may be divided into a valid region and an invalid region, where the invalid region includes an unmapped region and a mapped region. In particular, the unmapped region is a region that can be touched by the user with one hand, and applications in the unmapped region can be operated by the user with one hand. The mapped region is a region that cannot be touched by the user with one hand, and applications in the mapped region cannot be operated by the user with one hand. The valid region is set near the farthest distance that can be touched by the finger of one hand. When the user's finger touches the valid region, coordinate mapping will be performed according to the user's touch operation, so as to realize control of the applications in the mapped region. In general, region division may be done appropriately according to the farthest distance of one-handed operation.

It can be understood by those having ordinary skills in the art that applications in the unmapped region may be classified as proximal applications, and applications in the mapped region may be classified as distal applications.

In an embodiment, the setting of the preset pressure range is to establish a pressure-displacement mapping relationship with a proportional change between the pressure value and the displacement distance. The lower limit and the upper limit of the preset pressure range may be appropriately adjusted and selected according to the actual use. For example, the lower limit of the preset pressure range may be set to 1N, and the upper limit of the preset pressure range may be set to 2N. In addition, the setting of the preset pressure range can also prevent the user from misoperation and avoid controlling of the distal application due to the user's misoperation. It can be understood by those having ordinary skills in the art that there may be only one preset pressure range in a terminal, but the lower limit and the upper limit of the preset pressure range may be appropriately adjusted and selected according to the actual use.

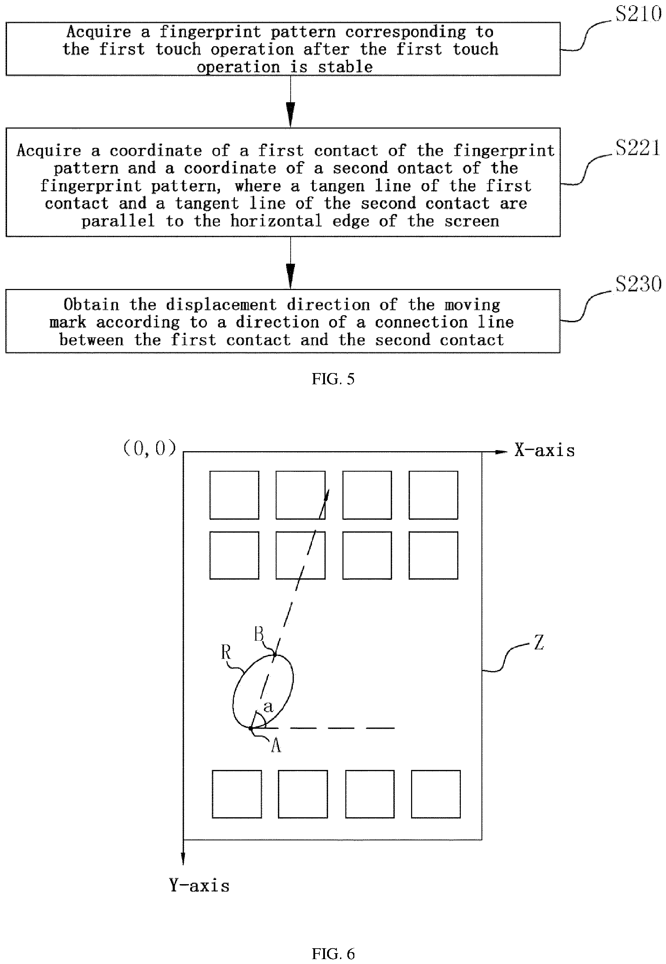

As shown in FIG. 5, in an embodiment, a detailed process of step S200 in the embodiment shown in FIG. 2 is provided. In this embodiment, step S200 includes but is not limited to the following steps S210 to S230.

At step S210, a fingerprint pattern corresponding to the first touch operation is acquired after the touch operation is stable.

At step S221, a coordinate of a first contact of the fingerprint pattern and a coordinate of a second contact of the fingerprint pattern are acquired, where a tangent line of the first contact and a tangent line of the second contact are parallel to a horizontal edge of the screen.

At step S230, the displacement direction of the moving mark is obtained according to a direction of a connection line between the first contact and the second contact.

In an embodiment, after the first touch operation is stable, that is, after the fingerprint pattern of the user can be stably identified, the coordinate of the first contact of the fingerprint pattern and the coordinate of the second contact of the fingerprint pattern are acquired, where the tangent line of the first contact and the tangent line of the tangent line of the second contact are parallel to the horizontal edge of the screen. Then, the displacement direction of the moving mark can be obtained according to the direction of the connection line between the first contact and the second contact.

The following is an exemplary description.

As shown in FIG. 6, the terminal may construct a first coordinate system according to a screen Z in advance. In the first coordinate system, the horizontal edge of the screen extends along an X-axis direction and a vertical edge of the screen extends along a Y-axis direction, and the coordinate origin of the first coordinate system is located in an upper left corner of the screen Z. After a fingerprint pattern R corresponding to the first touch operation is detected in the screen Z, a coordinate $(x1, y1)$ of a first contact A and a coordinate $(x2, y2)$ of a second contact B are acquired according to the fingerprint pattern R, where the tangent line of the first contact A and the tangent line of the second contact B are parallel to the horizontal edge of the screen, that is, the first contact A with the maximum Y-axis coordinate value and the first contact B with the minimum Y-axis coordinate value in the fingerprint pattern R are acquired. Then, a connection line is constructed between the first contact A and the second contact B, and the connection line forms a direction angle a with the X-axis. The value of the direction angle a is obtained by using the following formula:

$$a = \arctan(\ |y1\text{-}y2|\ /\ |x2\text{-}x1|\ )$$

After the value of the direction angle a is obtained, the displacement direction of the moving mark can be determined according to the direction angle a.

In an embodiment, the displacement direction determined by the direction angle may be a direction in which the first contact points to the second contact or a direction in which the second contact points to the first contact. The displacement direction determined by the direction angle may be appropriately selected according to different initial coordinates of the moving mark. For example, in the example shown in FIG. 6, when the initial coordinate of the moving mark is located in the upper middle of the screen Z, the displacement direction in this case may be a direction in which the second contact B points to the first contact A because there is no displacement distance in an upward direction; and when the initial coordinate of the moving mark is located at a midpoint of the connection line between the first contact A and the second contact B, the displacement direction in this case may be a direction in which the first contact A points to the second contact B.

In addition, in another embodiment, step S221 in the embodiment shown in FIG. 5 may be replaced by step S222, and step S222 includes: acquiring a coordinate of a first contact of the fingerprint pattern and a coordinate of a second contact of the fingerprint pattern, where a tangent line of the first contact and a tangent line of the second contact are parallel to the vertical edge of the screen.

In this embodiment, the difference between this embodiment and the embodiment shown in FIG. 5 is that the selected first contact and second contact are different. It is noted that since the selected first contact and second contact are different, the finally obtained direction angles will be different. Although the finally obtained direction angles are different, the difference in the directivity of the two direction angles is not large, and the deviation caused by the two direction angles may be only reflected in the angle accuracy, which is imperceptible to the user, so it will not affect the user experience.

In this embodiment, the selected first contact and second contact are respectively the contact with the maximum X-axis coordinate value and the contact with the minimum X-axis coordinate value in the fingerprint pattern. This embodiment belongs to the same inventive concept as the embodiment shown in FIG. 5. The difference between the two embodiments is that the selected first contact and second contact are different, but the difference does not affect the specific implementation effect. In addition, since the above two embodiments have the same method principle, the method principle of this embodiment will not be described in detail here.

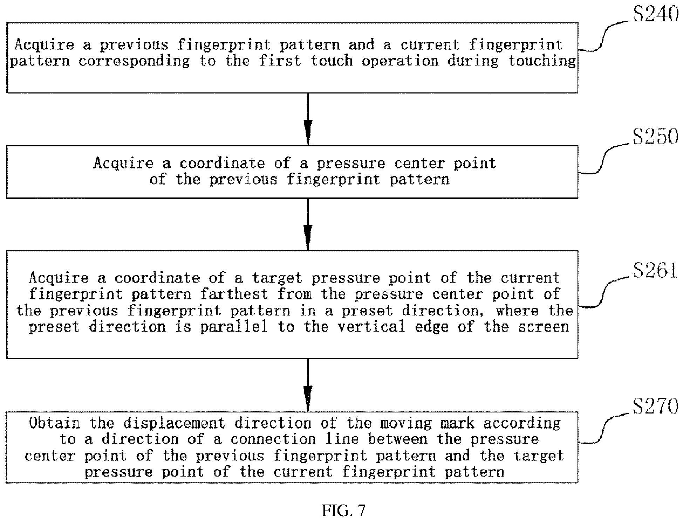

As shown in FIG. 7, in another embodiment, another detailed process of step S200 in the embodiment shown in FIG. 2 is provided. In this embodiment, step S200 includes but is not limited to the following steps S240 to S270.

At step S240, a previous fingerprint pattern and a current fingerprint pattern corresponding to the first touch operation during touching are acquired.

At step S250, a coordinate of a pressure center point of the previous fingerprint pattern is acquired.

At step S261, a coordinate of a target pressure point of the current fingerprint pattern farthest from the pressure center point of the previous fingerprint pattern in a preset direction is acquired, where the preset direction is parallel to the vertical edge of the screen.

At step S270, the displacement direction of the moving mark is obtained according to a direction of a connection line between the pressure center point of the previous fingerprint pattern and the target pressure point of the current fingerprint pattern.

In an embodiment, during the first touch operation, the identified fingerprint pattern and pressure value are in an unstable state of continuous change, that is, the range of the identified fingerprint pattern and pressure value are gradually increased during the first touch operation. When the first touch operation is in a stable state, the identified fingerprint pattern and the pressure value will remain in a stable state. Since there is a difference between the detected previous fingerprint pattern and the current fingerprint pattern, and between the detected previous pressure value and the current pressure value, which reflects the displacement direction desired by the user. Therefore, the coordinate of the pressure center point of the previous fingerprint pattern and the coordinate of the target pressure point of the current fingerprint pattern farthest from the pressure center point of the previous fingerprint pattern in the preset direction are acquired first, and then the displacement direction of the moving mark is obtained according to the direction of the connection line between the pressure center point of the previous fingerprint pattern and the target pressure point of the current fingerprint pattern.

It can be understood by those having ordinary skills in the art that the fingerprint pattern of a user's finger can be validly identified only when a force is generated between the user's finger and the screen. Therefore, the identified fingerprint pattern may be regarded as a set of points where the user's finger exerts a force on the screen. Therefore, in this embodiment, the pressure center point of the previous fingerprint pattern is the center point in the set of points where the user's finger exerts a force on the screen, while the target pressure point of the current fingerprint pattern is a point in the set of points where the user's finger exerts a force on the screen which is farthest from the pressure center point of the previous fingerprint pattern in the preset direction.

The following is an exemplary description.

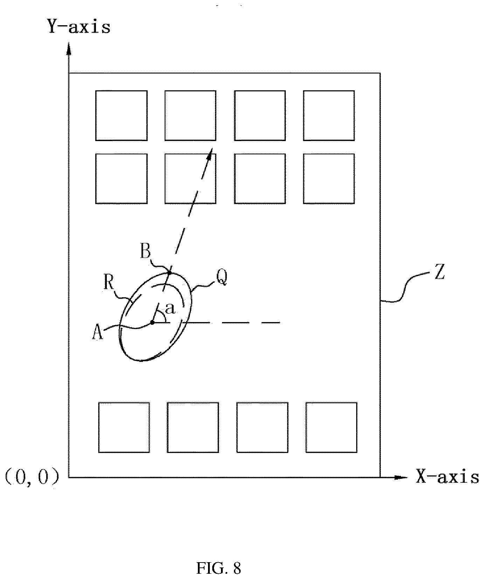

As shown in FIG. 8, the terminal may construct a first coordinate system according to a screen Z in advance. In the first coordinate system, a horizontal edge of the screen extends along an X-axis direction and a vertical edge of the screen extends along a Y-axis direction, and the coordinate origin of the first coordinate system is located in a lower left corner of the screen Z. After a previous fingerprint pattern R and a current fingerprint pattern Q corresponding to the first touch operation are respectively detected in the screen Z, a coordinate $(x1, y1)$ of a pressure center point A of the previous fingerprint pattern R is acquired, and a coordinate $(x2, y2)$ of a target pressure point B farthest from the pressure center point A in the current fingerprint pattern Q along the Y-axis direction is acquired. Then, a connection line is constructed between the pressure center point A and the target pressure point B, and the connection line forms a direction angle a with the X-axis. The value of the direction angle a is obtained by using the following formula:

$$a = \arctan( |y1\text{-}y2| / |x2\text{-}x1| )$$

After the value of the direction angle a is obtained, the displacement direction of the moving mark may be determined according to the direction angle a.

In an embodiment, the displacement direction determined by the direction angle may be a direction in which the pressure center point points to the target pressure point or a direction in which the target pressure point points to the pressure center point. The displacement direction determined by the direction angle may be appropriately selected according to different initial coordinates of the moving mark. For example, in the example shown in FIG. 8, when the initial coordinate of the moving mark is located in the upper middle of the screen Z, the displacement direction in this case may be a direction in which the target pressure point points to the pressure center point because there is no displacement distance in an upward direction; and when the initial coordinate of the moving mark is located at the midpoint of the connection line between the pressure center point and the target pressure point, the displacement direction in this case may be a direction in which the pressure center point points to the target pressure point.

In addition, in another embodiment, step S261 in the embodiment shown in FIG. 7 may be replaced by step S262, and step S262 includes: acquiring a coordinate of a target pressure point of the current fingerprint pattern farthest from the pressure center point of the previous fingerprint pattern in a preset direction, where the preset direction is parallel to the horizontal edge of the screen.

In this embodiment, the difference between this embodiment and the embodiment shown in FIG. 7 is that the selected target pressure points of the current fingerprint pattern are different. It is noted that since the selected target pressure points of the current fingerprint pattern are different, the finally acquired direction angles will be different. Although the finally acquired direction angles are different, the difference in the directivity of the two direction angles is not large, and the deviation caused by the two direction angles may be only reflected in the angle accuracy, which is imperceptible to the user, so it will not affect the user experience.

In this embodiment, the selected target pressure point of the current fingerprint pattern is a contact farthest from the pressure center point of the previous fingerprint pattern along the X-axis direction. This embodiment belongs to the same inventive concept as the embodiment shown in FIG. 7. The difference between the two embodiments is that the selected target pressure points of the current fingerprint pattern are different, but the difference does not affect the specific implementation effect. In addition, since the above two embodiments have the same method principle, the method principle of this embodiment will not be described in detail here.

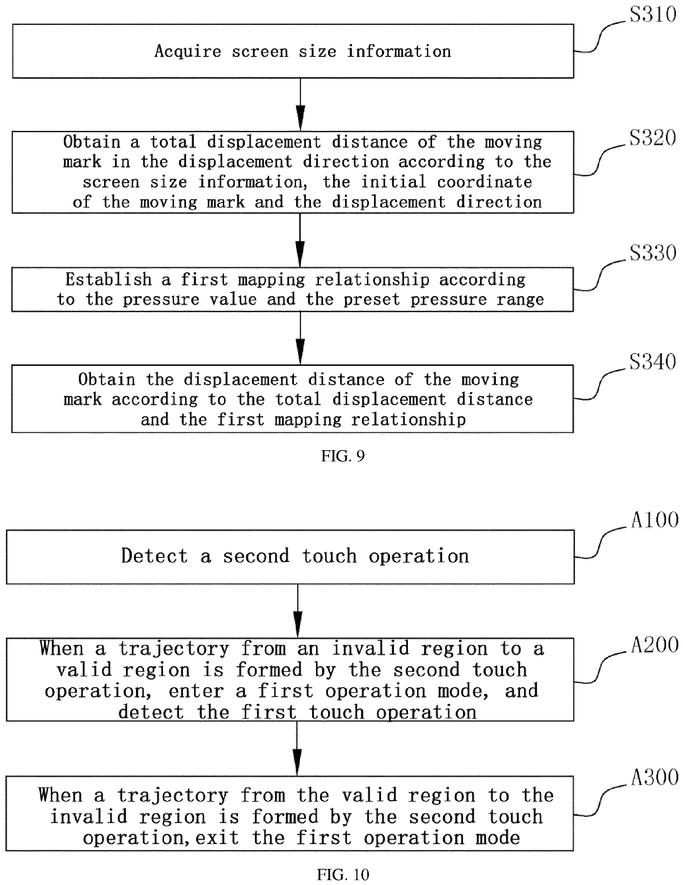

As shown in FIG. 9, in an embodiment, step S300 includes but is not limited to the following steps S310 to S340.

At step S310, screen size information is acquired.

At step S320, a total displacement distance of the moving mark in the displacement direction is obtained according to the screen size information, the initial coordinate of the moving mark and the displacement direction.

At step S330, a first mapping relationship is established according to the pressure value and the preset pressure range.

At step S340, the displacement distance of the moving mark is obtained according to the total displacement distance and the first mapping relationship.

In an embodiment, the terminal acquires the screen size information, and obtains the total displacement distance of the moving mark moving along the displacement direction according to the screen size information, the initial coordinate of the moving mark and the displacement direction. In addition, the terminal establishes a first mapping relationship according to the pressure value and the preset pressure range, and finally obtains the displacement distance according to the total displacement distance and the first mapping relationship.

In an embodiment, a first mapping relationship is established between the pressure value and the preset pressure range, as well as between the displacement distance and the total displacement distance, that is, the ratio between the pressure value and the preset pressure range is equal to the ratio between the displacement distance and the total displacement distance.

The following is an exemplary description.

As shown in FIG. 4, it is assumed that in the screen size information acquired by the terminal, the vertical edge of the screen has a length of H and the horizontal edge of the screen has a length of W, and a coordinate system is constructed according to the directions extending along the vertical edge of the screen and along the horizontal edge of the screen. In this coordinate system, the coordinate origin is located in the upper left corner of the screen. In addition, it is assumed that the initial coordinate of the moving mark is located at the position corresponding to the first touch operation and the initial coordinate of the moving mark is $(x_3, y_3)$, the direction angle corresponding to the displacement direction is a, the lower limit of the preset pressure range is Pmin, the upper limit of the preset pressure range is Pmax, and the pressure value corresponding to the first touch operation is P, then the total displacement distance Smax corresponding to the displacement direction may be obtained according to the following formula:

$$Smax = y_3 / \sin(a)$$

After the total displacement distance Smax is obtained, the displacement distance Sdelta corresponding to the displacement direction is obtained according to the following formula:

$$Sdelta = P * Smax / (Pmax - Pmin)$$

After the displacement distance Sdelta is obtained, the position of the moving mark can be changed according to the displacement direction and the pressure value corresponding to the first touch operation, so that the distal application can be selected and controlled according to the user's wishes, and the user experience can be improved.

In addition, in an embodiment, step S400 includes but is not limited to the following steps S410 to S420.

At step S410, coordinate information of the moving mark is updated according to the displacement direction, the displacement distance and the initial coordinate of the moving mark.

At step S420, when the coordinate information of the moving mark is within a coordinate range of the target application and the pressure value remains unchanged for a first duration, the target application is selected.

In an embodiment, after the displacement direction and the displacement distance are obtained, the coordinate information of the moving mark is updated according to the displacement direction, the displacement distance and the initial coordinate of the moving mark, so that the moving mark can move to the mapped region, and thus the distal application can be selected and controlled.

In an embodiment, when the coordinate information of the moving mark is within the coordinate range of the target application, it indicates that the moving mark has moved to the coordinate range of the target application, but the target application has not been selected yet. After the pressure value of the moving mark within the coordinate range of the target application remains unchanged for the first duration, the target application will enter the selected state, which can validly avoid the false selection caused by the moving mark moving within the coordinate range of the target application. For example, it is assumed that the target application can be selected when the coordinate information of the moving mark is within the coordinate range of the target application, then after the target application has been selected, the user releases his finger, and at this time, due to the change of the pressure value, the moving mark will return to the initial coordinate passing through another application. However, in this process, the moving mark enters the coordinate range of another application. As a result, another application may be selected by mistake. In order to solve the above problem, it is provided in this embodiment that the target application will be selected only when the coordinate information of the moving mark is within the coordinate range of the target application and the pressure value remains unchanged for the first duration, so as to avoid the problem of false selection.

In an embodiment, the first duration may be a default duration set at the time when the terminal leaves the factory, or a duration set by the user. When the first duration is the duration set by the user, the user may set the duration according to the actual use needs, for example, half a second or one second.

In addition, in an embodiment, step S500 includes but is not limited to the following steps.

At step S510, when a target application is selected and kept for a second duration, the target application is started.

In an embodiment, when the target application is selected and kept for the second duration, which indicates that the user wants to start the target application, the terminal will start the target application.

In an embodiment, the second duration may be a default duration set at the time when the terminal leaves the factory, or a duration set by the user. In response to the second duration being the duration set by the user, the user may set the duration according to the actual use needs, for example, half a second or one second.

In addition, in another embodiment, step S500 includes but is not limited to the following steps.

At step S520, when the target application is selected and kept for the second duration, editing of the target application is enabled.

In an embodiment, step S520 in this embodiment and step S510 in the above embodiment belong to parallel embodiments, and their determination conditions are the same. The difference between them is that the control mode for the target application is different. The control mode of step S510 in the above embodiment is to start the target application, while step S520 in this embodiment is to enable the editing of the target application. In this embodiment, when the target application is selected and kept for the second duration, which indicates that the user wants to edit the target application, the terminal will enable the target application, so that the target application is in an editable state.

In an embodiment, enabling the editing of the target application includes: editing the position of the target application, modifying the name of the target application, or deleting the target application.

In addition, in another embodiment, step S500 includes but is not limited to the following steps.

At step S530, when the target application is selected and the pressure value is less than a lower limit of the preset pressure range, the target application is started.

In an embodiment, step S530 in this embodiment and step S510 in the above embodiment belong to parallel embodiments, which have the same control mode for the target application, but the difference between them lies in different determination conditions. The determination condition of step S510 in the above embodiment is that the target application is selected and kept for the second duration, while the determination condition of step S530 in this embodiment is that the target application is selected and the pressure value is less than the lower limit of the preset pressure range. In this embodiment, when the target application is selected and the pressure value is less than the lower limit of the preset pressure range, for example, when a user lifts a finger, which indicates that the user wants to start the target application, the terminal will start the target application.

In addition, in another embodiment, step S500 includes but is not limited to the following steps.

At step S540, when the target application is selected and the pressure value is greater than an upper limit of the preset pressure range, the target application is started.

In an embodiment, step S540 in this embodiment and step S530 in the above embodiment belong to parallel embodiments, which have the same control mode for the target application, but the difference between them lies in different determination conditions. The determination condition of step S530 in the above embodiment is that the pressure value is smaller than the lower limit of the preset pressure range, while the determination condition of step S540 in this embodiment is that the pressure value is larger than the upper limit of the preset pressure range. In this embodiment, when the target application is selected and the pressure value is greater than the upper limit of the preset pressure range, for example, when the user increases the pressing force to make the pressure value greater than the upper limit of the preset pressure range, which indicates that the user wants to start the target application, the terminal will start the target application.

As shown in FIG. 10, in an embodiment, the method for operating a terminal screen further includes the following steps A100 to A300.

At step A100, a second touch operation is detected.

At step A200, when a trajectory from an invalid region to a valid region is formed by the second touch operation, a first operation mode is entered, and the first touch operation is detected.

At step A300, when a trajectory from the valid region to the invalid region is formed by the second touch operation, the first operation mode is exited.

In an embodiment, in order to meet the user's use needs and avoid unwanted misoperation by the user, before detecting the first touch operation, a trajectory formed by the second touch operation may be detected, and the corresponding subsequent operation steps may be executed according to the trajectory, which can not only avoid unwanted misoperation by the user, but also improve the user experience.

In an embodiment, after the terminal detects the second touch operation, the terminal will enter the first operation mode if a trajectory from the invalid region to the valid region is formed by the second touch operation, that is, the terminal will execute the method for operating a terminal screen in any of the above embodiments. If a trajectory from the valid region to the invalid region is formed by the second touch operation, the terminal will exit the first operation mode, that is, the user cannot use the method for operating a terminal screen in any of the above embodiments.

In an embodiment, there may be different implementations for forming the trajectory from the invalid region to the valid region by the second touch operation. For example, the second touch operation forms a trajectory from the unmapped region to the valid region. For another example, the second touch operation forms a trajectory from the mapped region to the valid region.

In an embodiment, there may be different implementations for forming the trajectory from the valid region to the invalid region by the second touch operation. For example, the second touch operation forms a trajectory from the valid region to the unmapped region. For another example, the second touch operation forms a trajectory from the valid region to the mapped region.

It can be understood by those having ordinary skills in the art that the trajectory may be a straight trajectory, a curve trajectory, a broken line trajectory, etc., and different kinds of trajectories do not constitute a limitation on this embodiment, as long as the cross-regional movement of the second touch operation between the invalid region and the valid region can be realized.

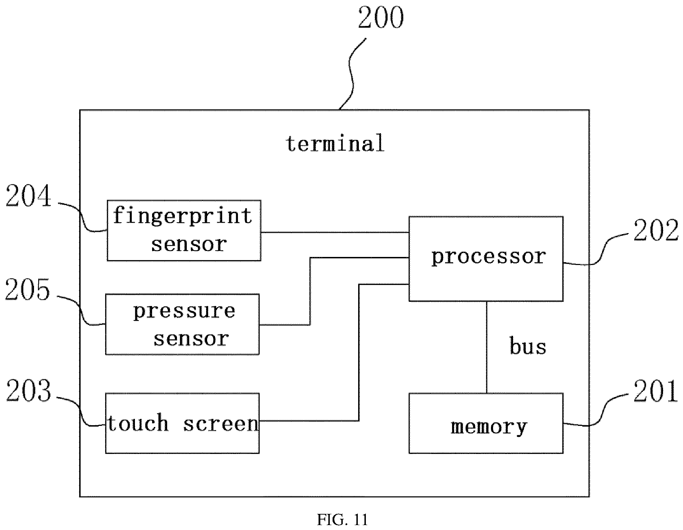

As shown in FIG. 11, according to an embodiment of the present application, a terminal is further provided. The terminal 200 may be any type of intelligent terminal, such as a smart phone, a tablet computer or other handheld intelligent mobile devices.

The terminal 200 includes a memory 201, a processor 202, a touch screen 203, a fingerprint sensor 204, a pressure sensor 205 and a computer program stored in the memory 201 and executable by the processor 202, where the touch screen 203, the fingerprint sensor 204 and the pressure sensor 205 are electrically connected to the processor 202, respectively.

The processor 202 and the memory 201 may be connected through a bus or other means. For example, in FIG. 11, the processor 202 and the memory 201 are connected through a bus.

It should be noted that the terminal 200 in this embodiment is based on the same inventive concept as the system architecture platform 100 in the embodiment shown in FIG. 1, so they have the same implementation principle and beneficial effects, which will not be described in detail here.

The memory 201 stores a non-transient software program and an instruction required to implement the method for operating a terminal screen in the above embodiments, which, when executed by the processor 202, cause the processor 202 to perform the method for operating a terminal screen in the above embodiments, for example, the method steps S100 to S500 in FIG. 2, the method steps S110 to S130 in FIG. 3, the method steps S210 to S230 in FIG. 5, the method steps S240 to S270 in FIG. 7, the method steps S310 to S340 in FIG. 9 and the method steps A100 to A300 in FIG. 10 described above.

The device embodiments described above are schematic, in which the units described as separate components may or may not be physically separated, that is, they may be located in one place or distributed over a plurality of network units. Some or all of the modules may be selected according to actual needs to achieve the purpose of the embodiments.

In addition, according to an embodiment of the present application, a computer readable storage medium is further provided, which stores a computer executable instruction, where the computer executable instruction, when executed by a processor or a controller, for example, the processor 202 in FIG. 11, causes the processor 202 to perform the method for operating a terminal screen in the above embodiments, for example, the method steps S100 to S500 in FIG. 2, the method steps S110 to S130 in FIG. 3, the method steps S210 to S230 in FIG. 5, the method steps S240 to S270 in FIG. 7, the method steps S310 to S340 in FIG. 9 and the method steps A100 to A300 in FIG. 10 described above.

The embodiments of the present application includes the following steps. A terminal acquires an initial coordinate of a moving mark used as a reference starting point after detecting a valid first touch operation. Then the terminal acquires a displacement direction of the moving mark according to the valid first touch operation, and acquires a displacement distance of the moving mark according to a pressure value corresponding to the valid first touch operation. After that, the terminal takes the initial coordinate of the moving mark as the reference starting point to make the moving mark move by the displacement distance in the displacement direction, so that the moving mark can replace the user's finger to select and operate a distal application in the screen. In this way, the distal application that cannot be touched by the user's finger can be controlled through proximal operation. According to the solutions provided in the embodiments of the present application, even if a user operates a large-screen terminal with one hand, he/she can also operates an application far from his finger in the screen, thus facilitating the user to operate the terminal with one hand and improving the user experience.

It can be understood by those having ordinary skills in the art that all or some of the steps in the method and the system disclosed above may be implemented as software, firmware, hardware and appropriate combinations thereof. Some or all of the physical components may be implemented as software executed by a processor, such as a central processing unit, a digital signal processor or a microprocessor, or as hardware, or as an integrated circuit, such as an application specific integrated circuit. Such software may be distributed on a computer readable medium, which may include a computer storage medium (or non-transitory medium) and a communication medium (or transitory medium). As is well known to those having ordinary skills in the art, the term "computer storage medium" includes volatile and nonvolatile, removable and non-removable media implemented in any method or technology for storing information, such as computer readable instructions, data structures, program modules or other data. The computer storage medium includes but is not limited to RAM, ROM, EEPROM, flash memory or other memory technologies, CD-ROM, digital versatile disk (DVD) or other optical disk storage, magnetic cartridge, magnetic tape, magnetic disk storage or other magnetic storage devices, or any other media that can be used to store desired information and can be accessed by a computer. Furthermore, as is well known to those having ordinary skills in the art, the communication medium generally includes computer readable instructions, data structures, program modules or other data in a modulated data signal such as a carrier wave or other transmission mechanisms, and may include any information delivery medium.

The above is a detailed description of some implementations of the present application, but the present application is not limited to the above embodiments. Those having ordinary skills in the art can also make various equivalent modifications or substitutions without violating the gist of the present application, and these equivalent modifications or substitutions are included in the scope defined by the claims of the present application.

**Claims**

1. A method for operating a terminal screen, comprising:

   in response to a detection of a valid first touch operation, acquiring an initial coordinate of a moving mark controlled by the first touch operation;
   acquiring a displacement direction of the moving mark according to the first touch operation;
   acquiring a displacement distance of the moving mark according to a pressure value corresponding to the first touch operation;
   changing a position of the moving mark according to the displacement direction, the displacement distance and the initial coordinate of the moving mark so as to select a target application; and
   controlling the target application.

2. The method for operating a terminal screen of claim 1, wherein the detection of the valid first touch operation comprises:

   acquiring a position coordinate of the first touch operation;
   acquiring the pressure value corresponding to the first touch operation; and
   determining that the first touch operation is detected as valid in response to the position coordinate of the first touch operation being in a valid region and the pressure value being in a preset pressure range.

3. The method for operating a terminal screen of claim 1, wherein acquiring a displacement direction of the moving mark according to the first touch operation comprises:

   acquiring a fingerprint pattern corresponding to the first touch operation after the first touch operation is stable;
   acquiring a coordinate of a first contact of the fingerprint pattern and a coordinate of a second contact of the fingerprint pattern, wherein a tangent line of the first contact and a tangent line of the second contact are both parallel to a horizontal edge or a vertical edge of the screen; and obtaining the displacement direction of the moving mark according to a direction of a connection line between the first contact and the second contact.

4. The method for operating a terminal screen of claim 1, wherein acquiring a displacement direction of the moving mark according to the first touch operation comprises:

acquiring a previous fingerprint pattern and a current fingerprint pattern corresponding to the first touch operation during touching; acquiring a coordinate of a pressure center point of the previous fingerprint pattern; acquiring a coordinate of a target pressure point of the current fingerprint pattern farthest from the pressure center point of the previous fingerprint pattern in a preset direction, wherein the preset direction is parallel to a vertical edge or a horizontal edge of the screen; and obtaining the displacement direction of the moving mark according to a direction of a connection line between the pressure center point of the previous fingerprint pattern and the target pressure point of the current fingerprint pattern.

5. The method for operating a terminal screen of claim 2, wherein acquiring a displacement distance of the moving mark according to the pressure value corresponding to the first touch operation comprises:

acquiring screen size information; obtaining a total displacement distance of the moving mark in the displacement direction according to the screen size information, the initial coordinate of the moving mark and the displacement direction; establishing a first mapping relationship according to the pressure value and the preset pressure range; and obtaining the displacement distance of the moving mark according to the total displacement distance and the first mapping relationship.

6. The method for operating a terminal screen of claim 1, wherein changing a position of the moving mark according to the displacement direction, the displacement distance and the initial coordinate of the moving mark so as to select a target application comprises:

updating coordinate information of the moving mark according to the displacement direction, the displacement distance and the initial coordinate of the moving mark; and selecting the target application in response to the coordinate information of the moving mark being within a coordinate range of the target application and the pressure value remaining unchanged for a first duration.

7. The method for operating a terminal screen of claim 6, wherein controlling the target application comprises:
starting the target application or enabling editing of the target application in response to the target application being selected and kept selected for a second duration.

8. The method for operating a terminal screen of claim 6, wherein controlling the target application comprises:
starting the target application in response to the target application being selected and the pressure value being smaller than a lower limit of a preset pressure range or larger than an upper limit of the preset pressure range.

9. The method for operating a terminal screen of claim 1, further comprising:

detecting a second touch operation; entering a first operation mode in response to a trajectory from an invalid region to a valid region being formed by the second touch operation, and detecting the first touch operation; and exiting the first operation mode in response to a trajectory from the valid region to the invalid region being formed by the second touch operation.

10. A terminal comprising a memory, a processor and a computer program stored in the memory and executable by the processor, wherein the computer program, when executed by the processor, causes the processor to perform the method for operating a terminal screen of any of claims 1 to 9.

11. A computer readable storage medium storing a computer executable instruction for performing the method for operating a terminal screen of any of claims 1 to 9.

100

121

system architecture platform

processor

120

140

fingerprint
sensor

direction
determination
module

150

pressure
sensor

130

touch
screen

pressure
distance
conversion
module

selection
execution
module

123

bus

memory

122

110

FIG. 1

When a valid first touch operation is detected, acquire an initial coordinate of a moving mark controlled by the first touch operation — S100

Acquire a displacement direction of the moving mark according to the first touch operation — S200

Acquire a displacement distance of the moving mark according to a pressure value corresponding to the first touch operation — S300

Change a position of the moving mark according to the displacement direction, the displacement distance and the initial coordinate of the moving mark, so as to select a target application — S400

Control the target application — S500

FIG. 2

Acquire a position coordinate of the first touch operation ⟋ S110

Acquire a pressure value corresponding to the first touch operation ⟋ S120

When the position coordinate of the first touch operation is in a valid region and the pressure value is in a preset pressure range, determine that the first touch operation is detected as valid ⟋ S130

FIG. 3

(0,0) ⟶ X-axis

application

mapped region

valid region

fingerprint pattern

(a)

(x3,y3)

unmapped region

Y-axis

FIG. 4

Acquire a fingerprint pattern corresponding to the first touch operation after the first touch operation is stable ⟋ S210

Acquire a coordinate of a first contact of the fingerprint pattern and a coordinate of a second ontact of the fingerprint pattern, where a tangen line of the first contact and a tangent line of the second contact are parallel to the horizontal edge of the screen ⟋ S221

Obtain the displacement direction of the moving mark according to a direction of a connection line between the first contact and the second contact ⟋ S230

FIG. 5

FIG. 6

```
                                                                            S240
┌─────────────────────────────────────────────────────────────────┐
│ Acquire a previous fingerprint pattern and a current fingerprint  │
│ pattern corresponding to the first touch operation during touching│
└─────────────────────────────────────────────────────────────────┘
                                 │
                                 ▼
                                                                            S250
┌─────────────────────────────────────────────────────────────────┐
│            Acquire a coordinate of a pressure center point        │
│                  of the previous fingerprint pattern              │
└─────────────────────────────────────────────────────────────────┘
                                 │
                                 ▼
                                                                            S261
┌─────────────────────────────────────────────────────────────────┐
│   Acquire a coordinate of a target pressure point of the current  │
│    fingerprint pattern farthest from the pressure center point of │
│  the previous fingerprint pattern in a preset direction, where the│
│   preset direction is parallel to the vertical edge of the screen │
└─────────────────────────────────────────────────────────────────┘
                                 │
                                 ▼
                                                                            S270
┌─────────────────────────────────────────────────────────────────┐
│ Obtain the displacement direction of the moving mark according    │
│      to a direction of a connection line between the pressure     │
│  center point of the previous fingerprint pattern and the target  │
│        pressure point of the current fingerprint pattern          │
└─────────────────────────────────────────────────────────────────┘
```

FIG. 7

FIG. 8

| Acquire screen size information | S310 |

↓

| Obtain a total displacement distance of the moving mark in the displacement direction according to the screen size information, the initial coordinate of the moving mark and the displacement direction | S320 |

↓

| Establish a first mapping relationship according to the pressure value and the preset pressure range | S330 |

↓

| Obtain the displacement distance of the moving mark according to the total displacement distance and the first mapping relationship | S340 |

FIG. 9

| Detect a second touch operation | A100 |

↓

| When a trajectory from an invalid region to a valid region is formed by the second touch operation, enter a first operation mode, and detect the first touch operation | A200 |

↓

| When a trajectory from the valid region to the invalid region is formed by the second touch operation, exit the first operation mode | A300 |

FIG. 10

200

terminal

204 — fingerprint sensor

205 — pressure sensor

203 — touch screen

processor — 202

bus

memory — 201

FIG. 11

## INTERNATIONAL SEARCH REPORT

| International application No. |
|---|
| **PCT/CN2020/105148** |

**A.    CLASSIFICATION OF SUBJECT MATTER**

G06F 3/0488(2013.01)i;  G06F 3/0481(2013.01)n;  H04M 1/725(2006.01)n

According to International Patent Classification (IPC) or to both national classification and IPC

**B.    FIELDS SEARCHED**

Minimum documentation searched (classification system followed by classification symbols)

G06F 3/-;  H04M1/-

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS: 移动, 位置, 触摸, 按压, 选中, 检测, 光标, 有效区域, 应用, 压力值, 单手, 初始坐标, 大屏幕, 位移方向, 位移距离, move, touch, push against, pitch on, detection, cursor, effective coverage, apply, pressure, single handedly, initial coordinate, big screen, sense of displacement, offset of displacement,

**C.    DOCUMENTS CONSIDERED TO BE RELEVANT**

| Category* | Citation of document, with indication, where appropriate, of the relevant passages | Relevant to claim No. |
|---|---|---|
| X | CN 106371749 A (QINGDAO HISENCE MOBILE COMMUNICATIONS TECHNOLOGY CO., LTD.) 01 February 2017 (2017-02-01) description paragraphs [0002]-[0027]; [0050]-[0070], figures 1-3 | 1-11 |
| X | CN 107734183 A (HUIZHOU TCL MOBILE COMMUNICATION CO., LTD.) 23 February 2018 (2018-02-23) description paragraphs [0002]-[0015]; [0048]-[0056], figures 1-3 | 1-11 |
| X | CN 106155452 A (HUAWEI TECHNOLOGIES CO., LTD.) 23 November 2016 (2016-11-23) description paragraphs [0002]-[0031]; [0060]-[0070], figures 1-3 | 1-11 |
| X | CN 104618587 A (ARCHERMIND TECHNOLOGY (NANJING) CO., LTD.) 13 May 2015 (2015-05-13) description paragraphs [0002]-[0027], figures 1-2 | 1-11 |

☐ Further documents are listed in the continuation of Box C.        ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **26 October 2020** | **04 November 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/105148**

| Patent document cited in search report | | | Publication date (day/month/year) | Patent family member(s) | | | Publication date (day/month/year) |
|---|---|---|---|---|---|---|---|
| CN | 106371749 | A | 01 February 2017 | None | | | |
| CN | 107734183 | A | 23 February 2018 | WO | 2019085921 | A1 | 09 May 2019 |
| CN | 106155452 | A | 23 November 2016 | None | | | |
| CN | 104618587 | A | 13 May 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910808947